# FASCICULE DE BREVET EUROPEEN

(11) **EP 3 300 536 B1**
(45) Date de publication et mention de la délivrance du brevet: **10.06.2020**
(21) Numéro de dépôt: 16825833.3
(22) Date de dépôt: 13.12.2016
(51) Int. Cl.: H02B 11/127

(54) **CHÂSSIS DE DÉBROCHAGE POUR DISJONCTEUR**
EINSCHUBGESTELL FÜR LEISTUNGSSCHALTER
DRAWOUT FRAME FOR CIRCUIT BREAKER

(30) Priorité: 15.12.2015 FR 1562400
(43) Date de publication de la demande: 04.04.2018
(73) Titulaire: HAGER-ELECTRO SAS, 67210 Obernai (FR)
(72) Inventeur: DURET, Antoine, 67000 Strasbourg (FR)
(74) Mandataire: Nuss, Laurent
(86) Numéro de dépôt international: PCT/FR2016/053349
(87) Numéro de publication internationale: WO 2017/103415

(56) Documents cités:
- EP-A1- 0 620 625
- CN-U- 201 674 139
- JP-U- S5 456 740
- US-A- 3 681 545

## Description

### DOMAINE DE L'INVENTION

La présente invention se rapporte à un châssis de débrochage pour un disjoncteur, lequel est apte à être agencé pour maintenir ledit disjoncteur dans une position embrochée sur une embase de connexion ou dans une position débrochée de cette embase. Ce type de châssis comporte classiquement deux flasques fixes aptes à être reliés à l'embase, et un chariot mobile apte à porter le disjoncteur et pourvu de moyens de guidage coopérant avec les flasques fixes correspondants pour assurer le déplacement du disjoncteur de l'une vers l'autre desdites positions embrochée et débrochée, chaque flasque fixe étant équipé d'un levier de manœuvre pourvu d'une poignée et pivotant autour d'un axe fixe, ledit levier étant agencé pour coopérer avec lesdits moyens de guidage du chariot, chaque levier étant équipé d'un dispositif de verrouillage agencé pour bloquer ce levier dans une position correspondant à l'une ou l'autre desdites positions embrochée et débrochée du disjoncteur,

### ARRIÈRE-PLAN DE L'INVENTION

Ce type de châssis est par exemple décrit dans le document EP0620625. Avec ce type de châssis, les leviers sont indépendants, et il est donc possible de les manipuler de façon antagoniste. Le mécanisme peut alors se bloquer, voire se détériorer. Le fait que les leviers de ce châssis soient indépendants oblige l'opérateur à faire un effort de coordination lors de leur manipulation pour l'embrochage et le débrochage.

Sur ce châssis actuel, chaque levier est verrouillé en position embrochée et débrochée par un dispositif de verrouillage basé sur des doigts d'indexage et localisé au milieu du flasque, donc à distance de la poignée du levier. Pour manipuler le chariot, l'opérateur doit donc dans un premier temps déverrouiller les deux dispositifs de verrouillage en désindexant les doigts. Pour cela, avec chacune de ses mains, il doit faire tourner le corps du dispositif de verrouillage afin de retirer axialement un doigt de verrouillage d'une ouverture ménagée dans le levier, et ce grâce à une rampe hélicoïdale. Les leviers de manœuvre sont alors libérés, et l'opérateur peut, dans un second temps, manipuler les poignées des leviers avec ses deux mains simultanément pour modifier la position du chariot.

Ces opérations nécessitent, non seulement des mouvements simultanés des deux mains de l'opérateur, mais également des manœuvres appliquées sur différentes pièces du châssis de débrochage.

Par ailleurs des lumières situées sur les leviers et les flasques sont disposées de manière à permettre l'insertion de plusieurs cadenas de condamnation.

Outre le fait que les leviers soient indépendants et nécessitent un effort de coordination lors de l'usage du châssis, le châssis de débrochage présente deux défauts majeurs :
- nécessité d'arrêter le mouvement des leviers pour pouvoir déverrouiller les doigts d'indexage ;
- possibilité de laisser le produit en positions embrochée et débrochée sans verrouillage, ce qui entraîne un risque d'auto extraction du disjoncteur sous les effets électrodynamiques de la coupure.

Par ailleurs, il n'est pas commode d'identifier les lumières de condamnation et d'y insérer les cadenas à cause de leur emplacement difficilement accessible en partie inférieure du châssis.

US3681545A décrit un autre châssis de débrochage comprenant deux leviers de manœuvre qui sont liés par un arbre permettant une articulation simultanée des deux leviers. Seul un des leviers est pourvu d'une poignée.

JPS5456740U montre un levier pour manœuvrer un chariot débrochable. Le levier est équipé d'un dispositif de verrouillage qui est fixé sur l'extrémité du levier. Une manette peut être insérée sur l'extrémité du levier pour manœuvrer le levier et le dispositif de verrouillage.

### RÉSUMÉ DE L'INVENTION

L'objectif de la présente invention est de remédier aux inconvénients cités précédemment, en proposant un châssis dont la manipulation est simplifiée et s'effectue d'un geste, autant pour l'embrochage que le débrochage, l'extraction et le verrouillage, et où le verrouillage est actif par défaut, quelle que soit la position du disjoncteur.

Le châssis selon l'invention a une structure classique telle que définie précédemment. Il se caractérise à titre principal en ce qu'il comprend des moyens d'articulation simultanée des deux leviers, et en ce qu'il comprend des moyens de couplage de la manipulation des leviers avec la manipulation du dispositif de verrouillage.

L'idée principale de cette invention consiste à rendre les deux leviers dépendants, afin que leur manipulation soit forcément simultanée. Ainsi les gestes effectués par la main droite et la main gauche de l'opérateur consistent en des mouvements liés et symétriques. De plus, de par le couplage levier / dispositif de verrouillage, l'opérateur n'a plus besoin de lâcher les poignées des leviers pour aller activer/désactiver le dispositif de verrouillage. Toutes les opérations de verrouillage / déverrouillage et les actions d'embrochage / débrochage / extraction du disjoncteur s'effectuent de manière simultanée et simplement en gardant les mains sur les poignées des leviers.

Selon une caractéristique additionnelle possible, lesdits moyens d'articulation simultanée consistent en un arbre de liaison reliant les deux leviers, des moyens de blocage en rotation étant disposés entre l'arbre et chaque levier, l'axe de rotation de chaque levier et l'axe de rotation de l'arbre étant confondus. Les deux leviers ne peuvent donc être articulés qu'ensemble. En d'autres termes, si l'opérateur soulève le levier de droite, alors le levier de gauche se soulèvera également. Les leviers ne peuvent pas être manipulés de façon antagoniste.

Par exemple, les moyens de blocage en rotation consistent en un méplat sur l'arbre au niveau de la zone de jonction entre le levier et l'arbre.

Selon une possibilité, lesdits moyens de couplage consistent, pour chaque levier, en une manette de commande du dispositif de verrouillage et disposée au niveau de la poignée du levier. L'opérateur manipule ainsi deux manettes de commande, soit une de chaque main, pour réaliser les opérations de verrouillage / déverrouillage et les actions d'embrochage / débrochage / extraction du disjoncteur.

Préférentiellement, la manette de commande, mobile en translation selon un axe perpendiculaire au plan contenant le mouvement du levier, entre une position verrouillée où une surface extérieure de la manette se positionne en vis-à-vis et en butée contre au moins un tronçon du contour extérieur du flasque, et une position déverrouillée où ladite surface extérieure de la manette se positionne en retrait du contour extérieur du flasque, ledit dispositif de verrouillage comprenant, pour chaque levier des moyens de rappel pour rappeler la manette vers sa position verrouillée.

Par conséquent, la manette est par défaut en position verrouillée, quelle que soit la position du disjoncteur, grâce au ressort de rappel, et au contact entre la manette et le flasque. Pour passer à la position déverrouillée, l'opérateur doit faire translater la manette à l'encontre de la force de rappel du ressort, afin qu'il n'y ait plus de contact entre la manette et le flasque. Après déverrouillage, le levier peut alors être manipulé.

Selon une possibilité, ladite manette se compose :
- d'un corps entourant et épousant la forme de la poignée du levier et comportant des moyens de guidage en translation de la manette par rapport à la poignée,
- et d'une languette s'étendant orthogonalement du corps et dont la bordure extérieure correspond à ladite surface extérieure de la manette.

Ces moyens de guidage en translation consistent par exemple en au moins une rainure de guidage pratiquée dans le corps de la manette et dans laquelle coulisse la poignée du levier.

Selon une possibilité, lesdits moyens de rappel consistent en un ressort de rappel travaillant en compression intercalé entre d'une part une surface mobile appartenant à la manette, et d'autre part une surface fixe appartenant à la poignée du levier et positionnée en vis-à-vis de ladite surface mobile, ledit ressort travaillant entre une position de repos où la surface mobile est distale de la surface fixe, et une position comprimée où la surface mobile est proximale de la surface fixe. En fonction du choix des surfaces mobiles et fixes, l'opérateur doit soit appuyer, soit tirer sur les deux manettes pour déverrouiller le dispositif.

Selon une caractéristique additionnelle possible, ladite bordure extérieure de la languette comporte :
- une première zone apte à venir au contact d'un premier tronçon du contour extérieur du flasque pour empêcher le débrochage du disjoncteur, et au contact d'un second tronçon du contour extérieur du flasque pour empêcher l'extraction du disjoncteur ;
- une seconde zone apte à venir au contact d'un troisième tronçon du contour extérieur du flasque pour empêcher l'embrochage du disjoncteur.

Optionnellement, languette de la manette comporte des moyens de renfort consistant en une surépaisseur localisée dans la zone centrale de la languette et rejoignant le corps de la manette. Ainsi, même si l'opérateur force sur les manettes, la languette résistera et ne se déformera pas. Le dispositif de verrouillage se doit d'être inviolable, vu le contexte d'utilisation du châssis de débrochage.

Toujours dans l'objectif d'inviolabilité, la manette et la poignée peuvent chacune comporter une lumière, lesdites lumières étant aptes à se superposer en position verrouillée de la manette de manière à y insérer un cadenas. Cette fermeture à clé peut être effectuée aussi bien en position embrochée, que débrochée, ou encore extraite du disjoncteur. Ces lumières sont de plus bien visibles et facilement accessibles vu leur emplacement sur la manette et la poignée. Cette fonction de condamnation a pour effet de bloquer la translation des manettes, rendant alors le système inopérant. Il sera alors impossible d'embrocher ou d'extraire le chariot en position débrochée, mais aussi de débrocher le chariot si celui-ci est en position embrochée.

Selon une possibilité, lesdits moyens de guidage du chariot mobile consistent, pour chaque côté latéral, en deux pions positionnés en vis-à-vis de l'un parmi les deux flasques et de l'un parmi les deux leviers, et étant mobiles à l'intérieur d'une rainure dudit flasque et simultanément contre un profil de came dudit levier, pour assurer le déplacement du disjoncteur de l'une vers l'autre desdites positions embrochée et débrochée, ledit profil de came du levier comportant un point d'inflexion suivi d'une gorge. Ce point d'inflexion constitue un point dur lors de la manipulation des leviers vers la position embrochée. Une fois le point dur passé, les pions arrivent dans les gorges prévues à cet effet. L'opérateur a ainsi la sensation d'avoir correctement « enclenché » le chariot pour l'embrochage. Cette variation dans l'effort d'insertion du chariot consiste en fin de compte en un retour d'information sensoriel sur l'action réalisée.

En plus de cette information sensorielle, l'opérateur dispose d'une information visuelle lui permettant de savoir si l'embrochage est réalisé ou non. En effet, il comprend un indicateur de position du chariot. Cet indicateur permet de transcrire la position du chariot par rapport à l'embase, traduisant alors la position embrochée par un marquage rouge, et la position débrochée par un marquage vert.

La présente invention va être mieux comprise à partir de la description détaillée ci-après et des dessins annexés qui sont fournis à titre d'illustration uniquement, sans limiter la présente invention.

### BRÈVE DESCRIPTION DES FIGURES

L'invention va à présent être décrite plus en détail, en référence aux figures annexées, pour lesquelles :
- la figure 1 est une vue générale en perspective d'un châssis de débrochage équipé d'un disjoncteur en position débrochée et verrouillée ;
- la figure 2 est montre le chariot sans le disjoncteur, en position extraite de l'embase de connexion ;
- la figure 3 montre un flasque ;
- la figure 4 illustre le mécanisme des leviers de manœuvres ;
- la figure 5 montre un exemple d'axe reliant les deux leviers de manœuvres ;
- les figures 6, 7, 8 et 9 illustrent une vue de côté du châssis d'embrochage avec différentes positions des leviers de manœuvre ;
- la figure 10 est une vue agrandie de la zone de contact entre une manette et le flasque correspondant ;
- les figures 11 à 13 montrent une première configuration des manettes selon l'invention ;
- les figures 14 à 15 montrent une seconde configuration des manettes selon l'invention ;
- la figure 16 est une vue en perspective d'un châssis de débrochage doté de manettes selon la première configuration, et cadenassé en position de débrochage du chariot ;
- les figures 17 à 21 sont des vues en perspective d'un châssis de débrochage doté de manettes selon la seconde configuration, avec le chariot mobile dans différentes positions ;
- les figures 22 et 23 sont des vues agrandies du profil de came du levier ;
- la figure 24 est un graphique montrant le profil de l'effort de manœuvre, c'est-à-dire l'évolution de l'effort d'insertion en fonction de la course d'embrochage.

### DESCRIPTION DES FORMES DE RÉALISATION PRISES EN EXEMPLE

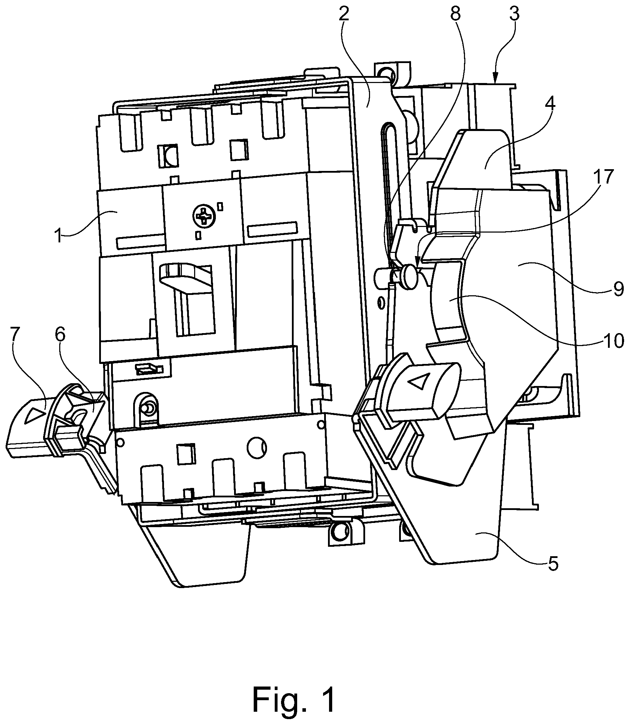

Tous les termes « haut », « bas », « droite », « gauche », « avant » et « arrière » utilisés dans la description ci-après se réfèrent au châssis de débrochage tel qu'illustré en figure 1.

Par ailleurs, la position du disjoncteur correspond à la position du chariot mobile sur lequel il est fixé. Ainsi, pour une meilleure compréhension de l'invention, c'est la position du chariot mobile qui sera décrite, plutôt que la position du disjoncteur.

La figure 1 est une vue générale d'un châssis de débrochage selon l'invention. Ce châssis comporte une embase de connexion (3) apte à être fixée contre un mur. A droite et à gauche de cette embase (3) se déploient des flasques (4) qui consistent en deux pièces latérales montées sur les côtés de l'embase (3) et qui sont fixes par rapport à l'embase (3). Un chariot mobile (2) équipé d'un disjoncteur (1) coopère avec les flasques (4) via des pions (8) s'étendant du chariot mobile (2) et coulissant dans une rainure (17) prévue à cet effet dans les flasques (4), afin de pouvoir bouger par rapport à l'embase (3).

Le mouvement du chariot mobile (2) est produit via deux leviers de manœuvre (5) disposés de façon adjacente aux deux flasques (4). De façon concrète, les leviers (5) sont parallèles aux flasques (4) et ont un mouvement de rotation par rapport aux flasques (4). Ces leviers (5) sont également dotés de rainures (47, 26) dans lesquelles peuvent circuler les pions (8) du chariot mobile (2). L'une de ces rainures (47) est dotée d'un profil de came (23) contre lequel glisse le pion (8) situé le plus en arrière sur le chariot (2). Ce profil de came (23) permet en fin de compte d'agir sur ce pion (8) pour provoquer la translation du chariot (2) lors du mouvement des leviers (5). Ces derniers (5) sont manipulés par un opérateur qui vient poser ses mains sur les deux poignées (6) s'étendant des leviers (5).

Des manettes de commande (7) sont disposées autour des poignées (6) et consistent en des moyens de verrouillage des leviers de manœuvre comme cela sera expliqué dans la suite de la description. L'opérateur manipule donc les leviers (5) directement via les manettes de commande (7) qui sont positionnées sur les poignées (6). Ainsi, l'opérateur peut à la fois actionner le mouvement des leviers (5) et le verrouillage/déverrouillage des leviers (5), en manipulant simplement les deux manettes (7).

De façon optionnelle, un indicateur de position (9) peut être ajouté au châssis au niveau de l'un des flasques (4) comme cela est illustré en figure 1. Dans ce cas de figure, un signal (10) de couleur verte apparaît au travers d'une fenêtre pratiquée sur la face avant de l'indicateur (9) signifiant que le chariot mobile (2) et donc à fortiori le disjoncteur (1) se trouve dans une position débrochée par rapport à l'embase (3).

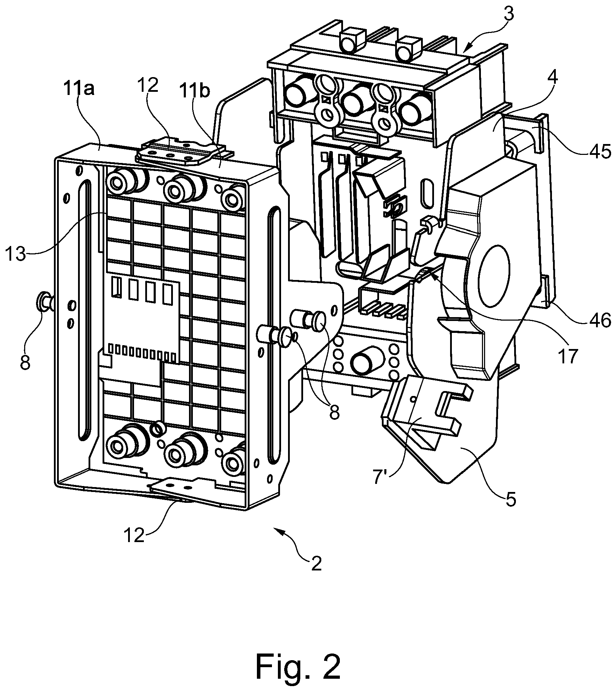

Sur la figure 2, le chariot mobile (2) est extrait de l'embase (3). Le disjoncteur (1) a été enlevé du chariot mobile (2) afin de laisser apparaître sa structure. En effet, ce chariot mobile (2) se compose d'un cadre entourant une semelle (13) sur laquelle peut être fixé le disjoncteur (1). Ce cadre se compose par exemple de deux cornières métalliques (11a, 11b) liées entre elles par deux plaquettes (12). Ces plaquettes (12) permettent la mise en position des cornières (11a, 11b) sur la semelle (13) ainsi que leur fixation. Sur chacune des cornières (11a, 11b) sont sertis deux pions (8) dotés d'épaulements. Ce sont ces pions (8) qui ont pour fonction de guider le chariot (2) sur les flasques (4). Ces derniers servent donc de support pour le guidage du chariot (2) en translation et servent également de structure à l'ensemble du châssis de débrochage.

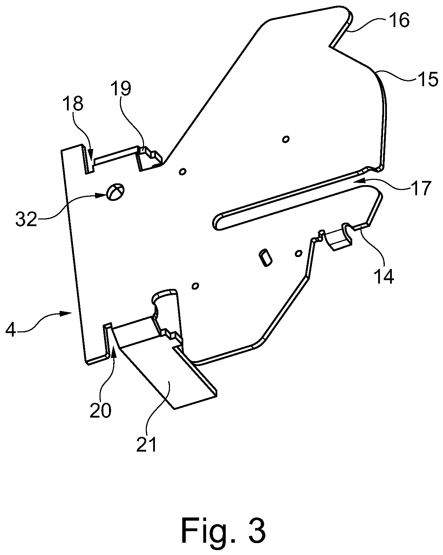

Le flasque (4) est illustré plus précisément en figure 3. Il consiste en une plaque métallique avec des découpes particulières permettant notamment la création de la rainure (17) ainsi que la création de deux languettes (19, 21) aptes à être pliées en direction de l'embase (3) afin d'y être fixées et d'empêcher tout mouvement du flasque (4) par rapport à l'embase (3) vers le haut et vers le bas.

Des entailles supérieure et inférieure (18, 20) adjacents aux languettes (19, 21) sont prévues pour l'insertion de plaquettes (45, 46) tel qu'illustré en figure 2 afin d'empêcher tout mouvement des flasques (4) par rapport à l'embase (3) vers l'avant et vers l'arrière. De cette manière les flasques (4) sont donc fermement maintenus et fixes par rapport à l'embase (3).

Un orifice (32) est prévu dans chaque flasque (4) pour la rotation du levier (5) correspondant. Chaque flasque (4) a un contour extérieur relativement complexe et comprend plusieurs tronçons (14, 15, 16) qui vont coopérer avec la manette de commande (7), afin de verrouiller le chariot (2) dans différentes positions.

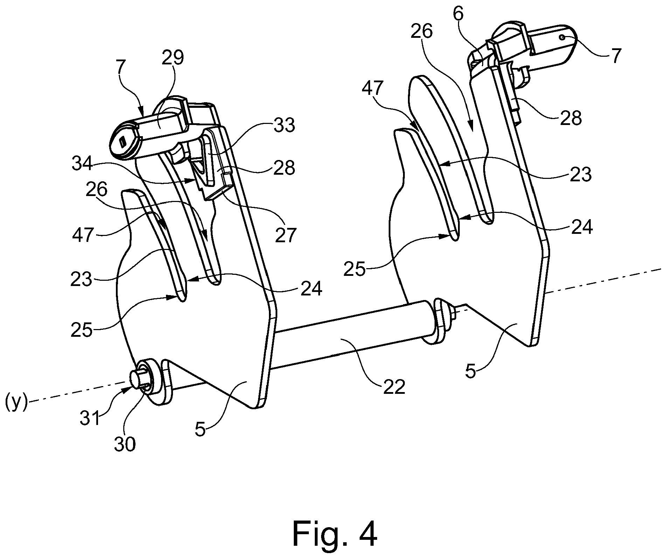

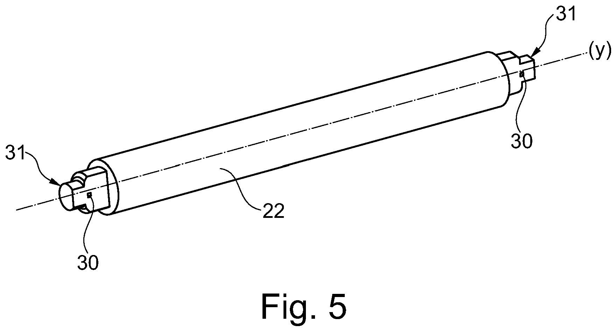

La figure 4 illustre les leviers de manœuvre (5) reliés entre eux par un arbre (22) tel qu'illustré en figure 5. Cet arbre (22) comprend au niveau de ses deux extrémités (31) un méplat (30) apte à être inséré dans un orifice prévu à cet effet dans le levier (5) et empêchant ainsi toute rotation du levier (5) par rapport à l'arbre (22) selon l'axe (Y). Ainsi, les deux leviers (5) et l'arbre (22) sont tous les trois solidaires et ne peuvent bouger que de manière simultanée. Cet arbre (22) avec ses deux méplats (30) constituent donc des moyens d'articulation simultanés des deux leviers (5).

Tout comme les flasques (4), les deux leviers (5) sont constitués d'une plaque de métal ayant une découpe complexe. Ainsi, chaque levier (5) comporte, deux rainures (47, 26) d'allure parallèle, l'une des rainures (47) étant dotée d'un profil de came (23), et une languette pliée à 90° et dirigée vers l'extérieur du châssis de débrochage et constituant la poignée (6) autour de laquelle est disposée la manette (7).

Cette dernière se compose principalement d'un corps (29) entourant la poignée (6) et apte à translater par rapport à la poignée (6) et d'une languette (28) s'étendant orthogonalement au corps (29) et parallèlement à la plaque composant le levier (5). Cette languette (28) comprend une bordure extérieure dont deux zones (27, 34) sont aptes à venir en butée et contre un tronçon du contour extérieur du flasque (4) correspondant. La manette (7) comprend de plus une surépaisseur (33) localisée au niveau de la jonction entre le corps (29) et la languette (28) afin de renforcer la languette (28) lors du verrouillage du levier (5).

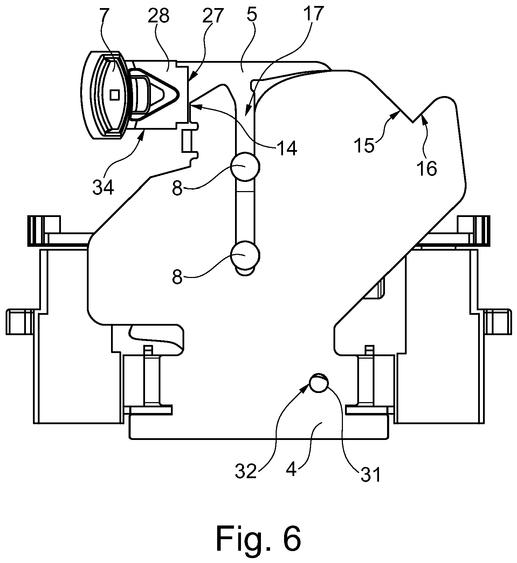

Les deux leviers (5) sont montés en liaison pivot dans les flasques (4) au niveau de l'orifice (32) prévu à cet effet. Les figures 6, 7, 8 et 9 permettent de montrer la position des leviers (5) par rapport aux flasques (4) lors des différentes positions du chariot (2) par rapport à l'embase (3).

Ainsi sur la figure 6 le chariot mobile (2) est en position embrochée. Le levier (5) est ainsi dirigé vers le haut du châssis de débrochage et la surface (27) de la bordure extérieure de la languette (28) de la manette (7) se trouve en butée et en contact contre le tronçon (14) du contour extérieur du flasque (4). Dans cette position embrochée, les deux pions (8) se retrouvent au fond de la rainure (17) du flasque (4) et également au fond des deux rainures (47, 26) du levier (5).

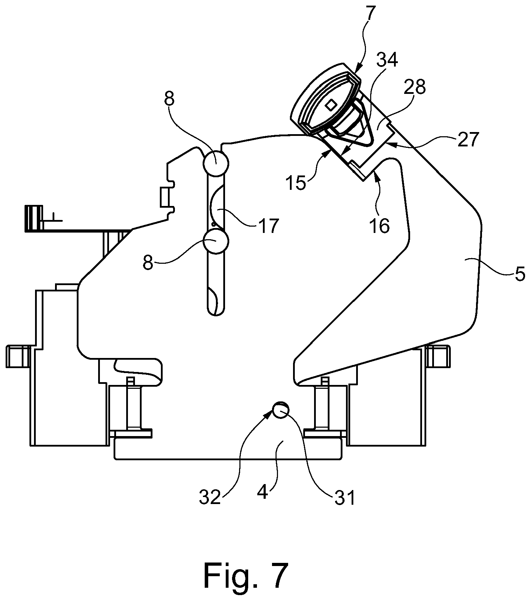

Après déverrouillage de la manette (7), le levier (5) peut être pivoté vers le bas jusqu'à une nouvelle position telle qu'illustrée en figure 7 correspondant à la position débrochée du chariot (2). Sur cette figure, la manette (7) est relâchée et donc à nouveau verrouillée et la surface (34) du contour extérieur de la languette (28) de la manette (7) se retrouve en butée contre le tronçon (15) du contour extérieur du flasque (4). Cette butée permet d'empêcher l'embrochage du chariot mobile et de le maintenir ainsi en position débrochée.

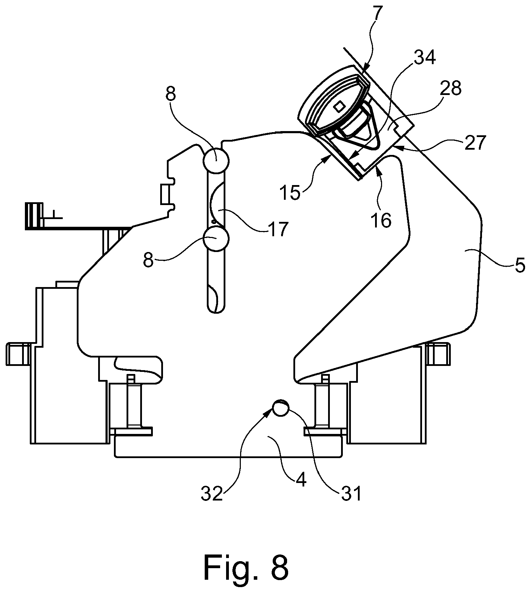

Dans cette position, le levier (5) comporte un jeu de fonctionnement et est capable d'arriver jusqu'à la position telle qu'illustrée en figure 8 où la surface (27) de la bordure extérieure de la languette (28) de la manette (7) vient en butée contre le tronçon (16) du contour extérieur du flasque (4). Cette butée permet d'empêcher l'extraction du chariot (2) mobile par rapport à l'embase (3).

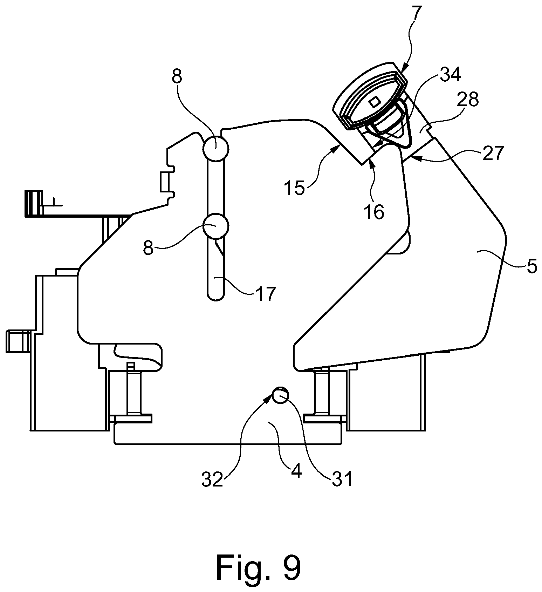

Pour pouvoir autoriser l'extraction, il faut déverrouiller la manette (7) comme cela est illustré en figure 9 afin que la bordure extérieure de sa languette (28) ne soit plus en contact et en butée contre les différents tronçons (14, 15, 16) du flasque (4). Dans ce cas-là le chariot (2) peut être totalement extrait.

Dans les positions débrochée et extraite, telles qu'illustrées aux figures 7, 8 et 9, les pions (8) se retrouvent au début de la rainure (17) du flasque (4) et des rainures (47, 26) du levier (5).

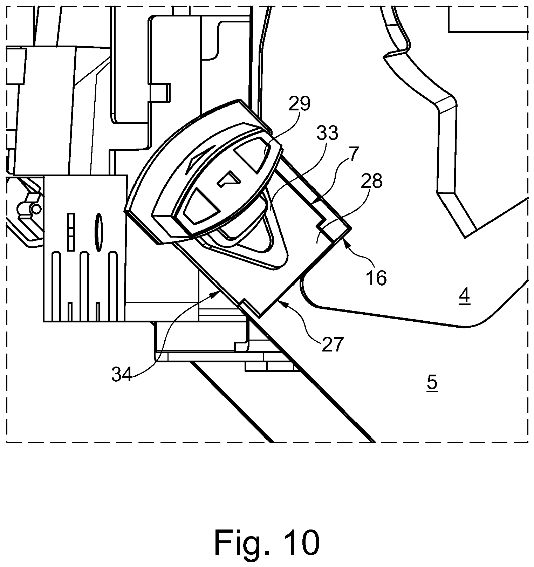

La position empêchant l'extraction complète telle qu'illustrée en figure 8 est reprise en figure 10 avec une vue en perspective. On voit bien la surface (27) de la languette (28) qui se retrouve en butée contre le tronçon (16) du flasque (4). La manette (7) est donc en position verrouillée. Pour déverrouiller la manette (7) il suffit au choix de la tirer vers l'extérieur du châssis ou de l'enfoncer vers l'intérieur du châssis afin que sa languette (28) se positionne non plus en butée contre un tronçon du contour extérieur du flasque (4) mais en retrait par rapport au contour extérieur du flasque (4). En effet la manette (7) peut translater par rapport à la poignée (6) afin de se retrouver soit en vis-à-vis du flasque (4) soit en retrait par rapport au flasque(5).

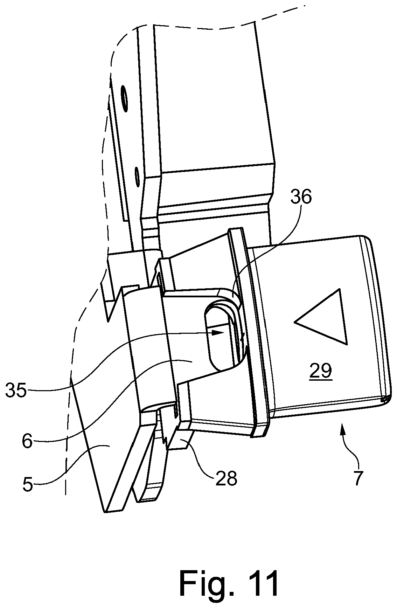

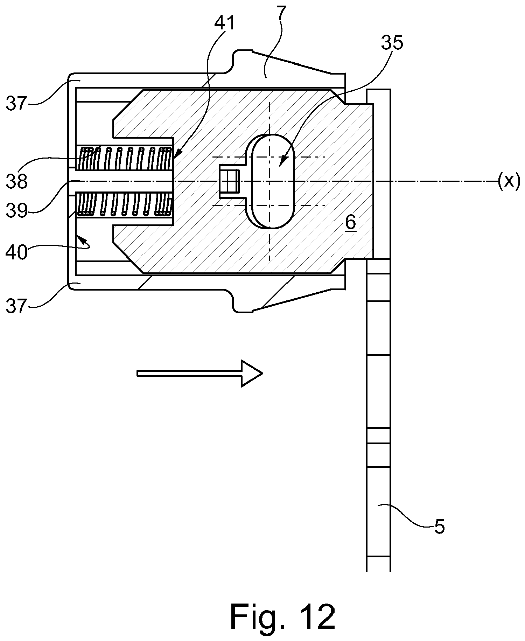

Selon une première configuration possible telle qu'illustrée aux figures 11, 12 et 13, le déverrouillage de la manette (7) s'effectue en appuyant sur la manette (7) c'est-à-dire en la faisant translater de l'extérieur vers l'intérieur du châssis de débrochage comme cela est illustré par la flèche en figure 12. Deux rainures (37) sont prévues à l'intérieur de la manette (7) pour permettre la translation de cette dernière par rapport à la poignée (6) du levier (5).

Un ressort de compression (38) est positionné entre la poignée (6) et la manette (7) afin de permettre un retour automatique en position de repos de la manette (7). Ce ressort (38) s'appuie au niveau d'une première extrémité sur une surface (41) fixe de la poignée (6) et au niveau de sa seconde extrémité sur une surface (40) mobile appartenant à la manette (7). Un axe central (39) relie la manette (7) et la poignée (6) afin d'empêcher toute désolidarisation de la manette (7) par rapport à la poignée (6). Le ressort (38) est enroulé autour de cet axe (39) positionné au niveau de l'axe de symétrie (X) de l'ensemble manette (7) / poignée (6).

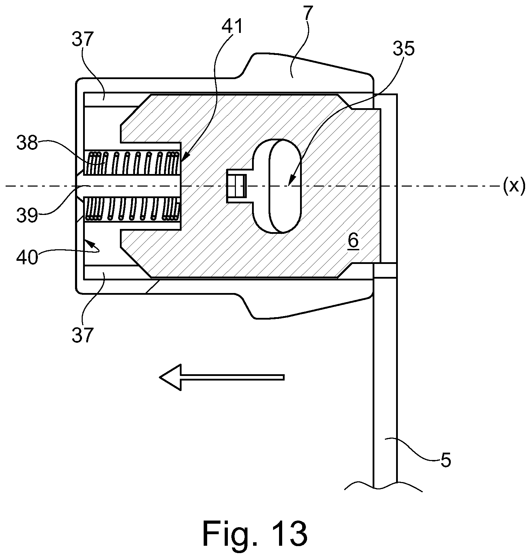

Lorsque l'opérateur appuie sur la manette (7) selon la flèche de la figure 12, la manette (7) translate jusqu'à arriver à une position en butée contre le levier (5) tel qu'illustré en figure 13. A ce moment-là, la languette (28) de la manette (7) se retrouve en retrait par rapport au contour extérieur du flasque (4) et le levier (5) peut être manipulé pour changer la position du chariot mobile (2).

Le fait de ne plus exercer de pression sur la manette (7) permet, grâce à l'action du ressort (38), un retour de la manette en position de repos selon la flèche telle qu'illustrée en figure 13 afin de se retrouver à nouveau en position de verrouillage comme illustré en figure 12, où la languette (28) se trouve en butée contre un tronçon du contour extérieur du flasque (4).

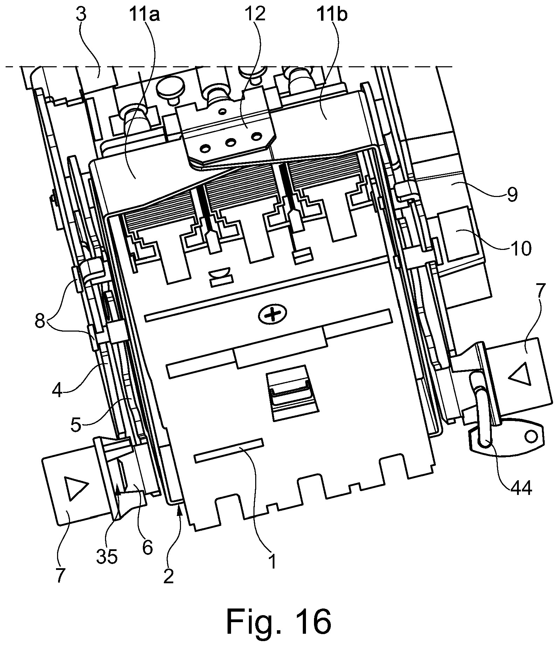

La poignée (6) est dotée d'une lumière sous la forme d'un orifice (35) et la manette (7) est également dotée d'une lumière sous la forme d'un renfoncement (36) alignée avec l'orifice (35) en position de repos de la manette (7) afin de pouvoir insérer un cadenas et donc de verrouiller le levier (5) dans sa position soit embrochée soit débrochée. Ce cadenas une fois mis en place empêche tout mouvement de translation de la manette (7) par rapport à la poignée (6) et la manette (7) ne peut donc plus être déverrouillée pour changer la position du levier (5). Cela est par exemple illustré en figure 16 avec le cadenas (44) empêchant tout déverrouillage de la manette (7) alors que le chariot mobile (2) est en position débrochée par rapport à l'embase (3).

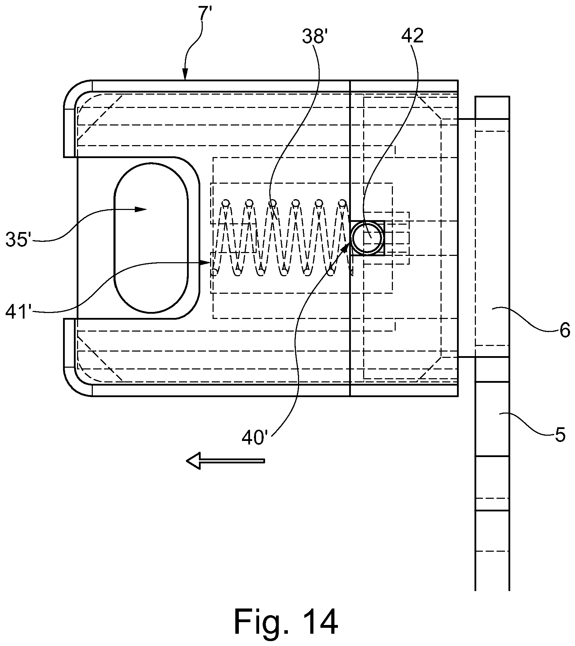

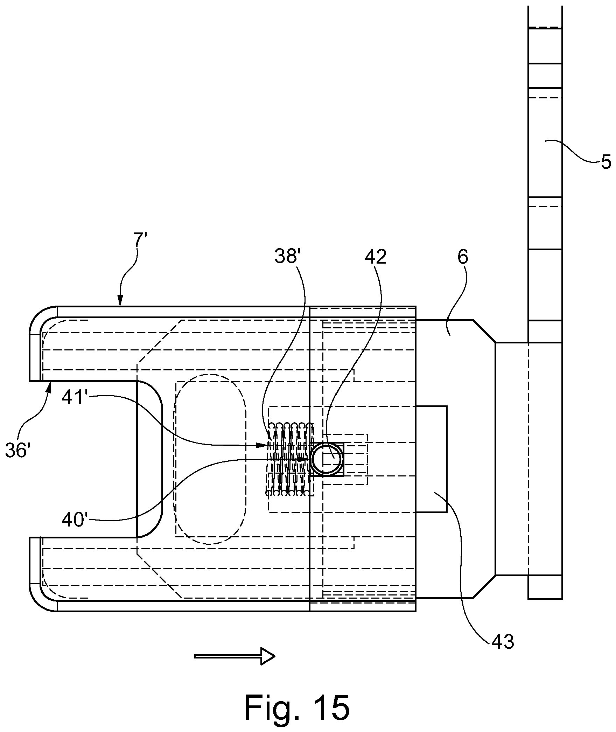

Selon une deuxième configuration possible de l'invention, l'opérateur peut tirer sur la manette (7') afin de la déverrouiller. Cela est illustré en particulier sur les figures 14 et 15 illustrant respectivement la position de repos verrouillée et la position déverrouillée de la manette (7'). Dans ce cas, le ressort (38') est inséré entre d'une part une surface mobile (40') appartenant à la manette (7') et d'autre part une surface fixe (41') appartenant à la poignée (6). La surface (40') mobile correspond à un axe transversal (42) traversant la manette (7') et la poignée (6) afin d'empêcher tout désassemblage de ces deux pièces (7', 6).

A nouveau, la poignée (6) est dotée d'une lumière sous la forme d'un orifice (35') et la manette (7') est dotée d'une lumière sous la forme d'un renfoncement (36'), le renfoncement (36') et l'orifice (35') étant alignés en position de repos de la manette (7') comme illustré sur la figure 14 afin de pouvoir y insérer un cadenas (44) pour bloquer le verrouillage du levier (5). La translation de la manette (7') est ainsi empêchée lorsqu'il y a un cadenas (44).

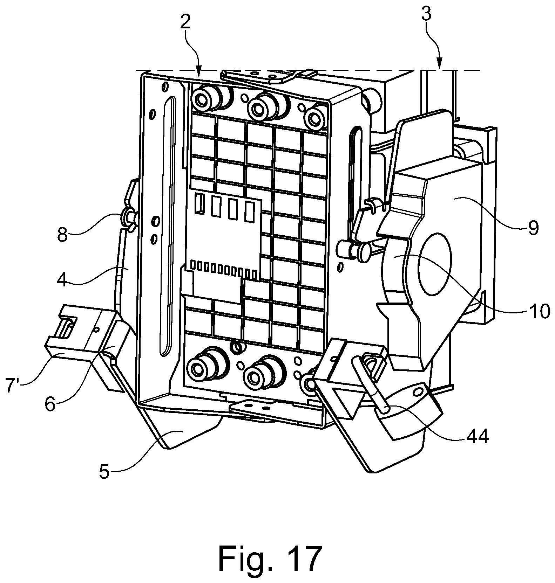

Les figures 17 à 21 montrent les différentes étapes pour l'embrochage du chariot mobile (2). Ainsi sur la figure 17, le chariot mobile (2) est en position débrochée avec le signal (10) de l'indicateur (9) qui est de couleur verte. Les manettes (7') sont verrouillées et l'une d'entre elles est cadenassée avec un cadenas (44) qui vient d'être ouvert.

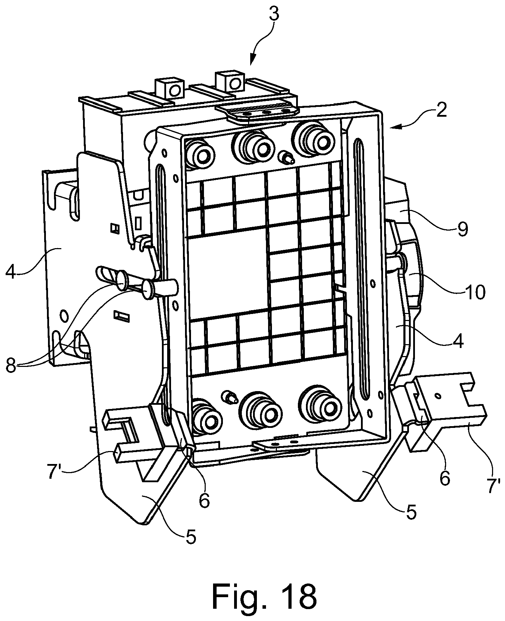

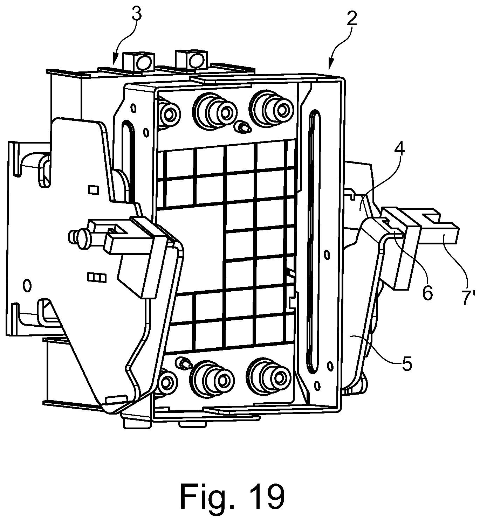

Sur la figure 18, le cadenas (44) a été enlevé et l'opérateur a tiré sur les manettes (7') afin de les amener en position déverrouillée. Sur la figure 19, toujours avec les manettes (7') en position déverrouillée, les leviers (5) de manœuvre ont été levés par pivotement et se retrouvent à mi-chemin de leur parcours d'embrochage.

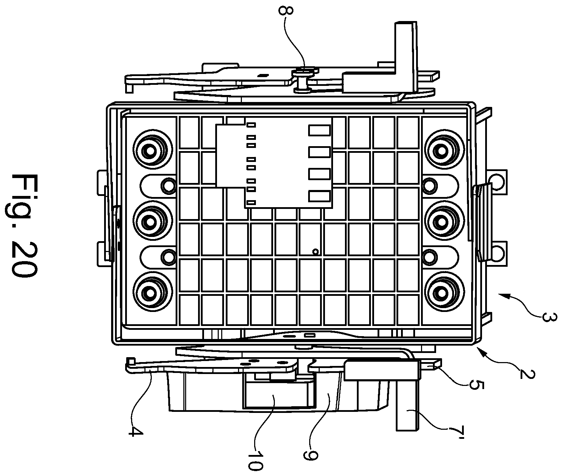

Sur la figure 20, les leviers (5) ont été entièrement remontés pour arriver en position d'embrochage du chariot mobile (2) sur l'embase (3). Dans ce cas, le signal (10) de l'indicateur (9) est de couleur rouge et les manettes (7') sont encore en position déverrouillée.

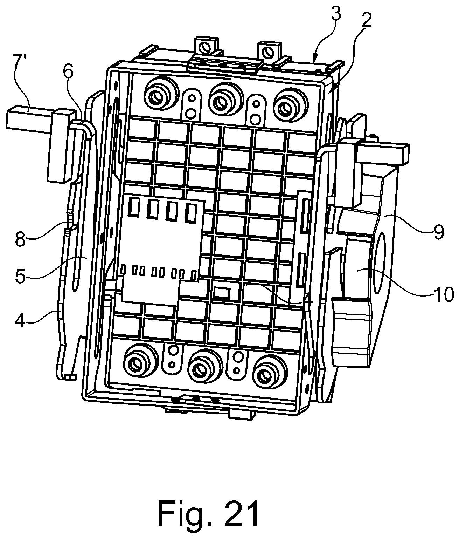

Sur la figure 21, l'opérateur a relâché les manettes (7') et celles-ci se retrouvent alors en position verrouillée, le chariot mobile (2) étant embroché.

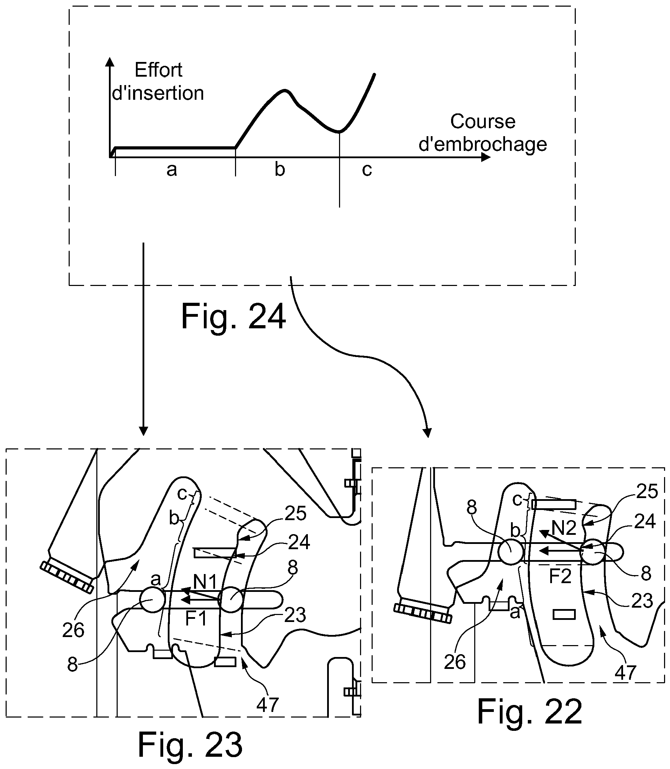

Les figures 22 à 24 donnent plus de précision quant au choix du profil de came (23) de la rainure (47) de chaque levier (5). L'objectif du profil de came (23) est de provoquer la translation du chariot mobile (2) sur lequel est monté le disjoncteur (1) lorsque l'on vient agir sur les leviers (5). La translation est donc générée par la variation de la distance entre le centre de rotation du levier (5) selon l'axe de rotation (Y) et le point de contact des pions de guidage (8) sur le profil de came (23). Ce dernier (23) est apparenté à une spirale logarithmique.

Les paramètres des courses d'embrochage et de débrochage ainsi que les coefficients de frottement entre le pion (8) et la came (23) ainsi qu'entre le pion (8) et le flasque (4) sont déterminants dans le paramétrage de l'équation de la spirale. Par ailleurs le profil de came (23) doit permettre de restituer une sensation donc des informations à l'utilisateur et ce à travers la variation de l'effort de manœuvre lors de la manipulation des leviers (5).

Ainsi, la première section (a) d'effort de la came (23) permet de vaincre l'inertie du chariot (2) et les frottements.

La seconde section d'effort (b) de la came (23) a pour but de traduire l'information d'action de mise en contact électrique, c'est-à-dire de valider l'embrochage du disjoncteur (1) sur l'embase (3). Pour ce faire, cette seconde section (b) du profil de came (23) comprend un point d'inflexion (24) avant d'aboutir sur une gorge (25) en bout de rainure (47) constituant une troisième section (c) du profil de came (23). Cette variation du profil de came (23) avec le point d'inflexion (24) permet de modifier le profil de l'effort d'insertion permettant ainsi un retour d'information sensoriel sur l'action réalisée par l'opérateur. La direction de l'effort (F1) normal au contact au niveau de ce point d'inflexion (24) est alors impacté ce qui se traduit par une augmentation de la valeur de la résultante (N2) et donc par une élévation de l'effort au lieu de manœuvre. Cela est par exemple reproduit sur le graphique 24 par une augmentation de l'effort d'insertion par rapport à la course d'embrochage. Pour réaliser la phase de diminution de l'effort avant la mise en contact de la semelle (13) sur l'embase (3) le profil de came (23) est regagné via un arrondi se terminant par la gorge (25). Cette décroissance d'effort indiquera à l'utilisateur que l'action est accomplie. Ainsi sur la courbe en figure 24 il y a une diminution de l'effort d'insertion par rapport à la course d'embrochage.

Cette gorge (25) ainsi formée permet non seulement de confirmer la position du chariot (2) en position embrochée mais sert également de verrou en cas de court-circuit. En effet, sous l'action des efforts dus au champ magnétique, le chariot (2) pourrait être amené à translater dans le sens de débrochage. La gorge (25) coopérant alors avec le pion de guidage (8) rend la rotation des leviers (5) impossible, le système est alors auto-verrouillé.

Les configurations montrées aux figures citées ne sont que des exemples possibles, nullement limitatifs, de l'invention qui englobe au contraire les variantes de formes et de conceptions à la portée de l'homme de l'art.

## Revendications

1. Châssis de débrochage pour un disjoncteur (1), lequel est apte à être agencé pour maintenir ledit disjoncteur (1) dans une position embrochée sur une embase (3) de connexion ou dans une position débrochée de cette embase (3), ledit châssis comportant deux flasques (4) fixes aptes à être reliés à l'embase (3), et un chariot (2) mobile apte à porter le disjoncteur (1) et pourvu de moyens de guidage coopérant avec les flasques (4) fixes correspondants pour assurer le déplacement du disjoncteur (1) de l'une vers l'autre desdites positions embrochée et débrochée, chaque flasque (4) fixe étant équipé d'un levier (5) de manœuvre et pivote autour d'un axe (Y) fixe, ledit châssis comprenant des moyens d'articulation simultanée des deux leviers (5), chaque levier (5) étant agencé pour coopérer avec lesdits moyens de guidage du chariot (2),
**caractérisé en ce que** chaque levier (5) est pourvu d'une poignée (6),
**en ce que** chaque levier (5) est équipé d'un dispositif de verrouillage agencé pour bloquer ce levier (5) dans une position correspondant à l'une ou l'autre desdites positions embrochée et débrochée du disjoncteur (1),
et **en ce qu'**il comprend des moyens de couplage de la manipulation des leviers (5) avec la manipulation du dispositif de verrouillage.

2. Châssis de débrochage pour un disjoncteur selon la revendication précédente, **caractérisé en ce que** lesdits moyens d'articulation simultanée consistent en un arbre (22) de liaison reliant les deux leviers (5), des moyens de blocage en rotation étant disposés entre l'arbre (22) et chaque levier (5), l'axe (Y) de rotation de chaque levier (5) et l'axe de rotation de l'arbre (22) étant confondus.

3. Châssis de débrochage pour un disjoncteur selon l'une des revendications précédentes, **caractérisé en ce que** lesdits moyens de couplage consistent, pour chaque levier (5), en une manette (7, 7') de commande du dispositif de verrouillage et disposée au niveau de la poignée (6) du levier (5).

4. Châssis de débrochage pour un disjoncteur selon la revendication précédente, **caractérisé en ce que** la manette (7, 7') de commande est mobile en translation selon un axe perpendiculaire au plan contenant le mouvement du levier (5), entre une position verrouillée où une surface extérieure de la manette (7, 7') se positionne en vis-à-vis et en butée contre au moins un tronçon du contour extérieur du flasque (4), et une position déverrouillée où ladite surface extérieure de la manette (7, 7') se positionne en retrait du contour extérieur du flasque (4), ledit dispositif de verrouillage comprenant, pour chaque levier (5) des moyens de rappel pour rappeler la manette (7, 7') vers sa position verrouillée.

5. Châssis de débrochage pour un disjoncteur selon la revendication précédente, **caractérisé en ce que** ladite manette (7, 7') se compose :
- d'un corps (29) entourant et épousant la forme de la poignée (6) du levier (5) et comportant des moyens de guidage en translation (37) de la manette (7, 7') par rapport à la poignée (6),
- et d'une languette (28) s'étendant orthogonalement du corps (29) et dont la bordure extérieure correspond à ladite surface extérieure de la manette (7, 7').

6. Châssis de débrochage pour un disjoncteur selon la revendication précédente, **caractérisé en ce que** lesdits moyens de rappel consistent en un ressort de rappel (38, 38') travaillant en compression intercalé entre d'une part une surface mobile (40, 40') appartenant à la manette (7, 7'), et d'autre part une surface fixe (41, 41') appartenant à la poignée (6) du levier (5) et positionnée en vis-à-vis de ladite surface mobile (40, 40'), ledit ressort (38, 38') travaillant entre une position de repos où la surface mobile (40, 40') est distale de la surface fixe (41, 41'), et une position comprimée où la surface mobile (40, 40') est proximale de la surface fixe (41, 41').

7. Châssis de débrochage pour un disjoncteur selon la revendication précédente, **caractérisé en ce que** ladite bordure extérieure de la languette (28) comporte :
- une première zone (27) apte à venir au contact d'un premier tronçon (14) du contour extérieur du flasque (4) pour empêcher le débrochage du disjoncteur (1), et au contact d'un second tronçon (16) du contour extérieur du flasque (4) pour empêcher l'extraction du disjoncteur (1) ;
- une seconde zone (34) apte à venir au contact d'un troisième tronçon (15) du contour extérieur du flasque (4) pour empêcher l'embrochage du disjoncteur (1).

8. Châssis de débrochage pour un disjoncteur selon la revendication précédente, **caractérisé en ce que** la languette (28) de la manette (7, 7') comporte des moyens de renfort consistant en une surépaisseur (33) localisée dans la zone centrale de la languette (28) et rejoignant le corps (29) de la manette (7, 7').

9. Châssis de débrochage pour un disjoncteur selon la revendication précédente, **caractérisé en ce que** la manette (7, 7') et la poignée (6) comportent chacune une lumière (36, 36', 35, 35'), lesdites lumières (36, 36', 35, 35') étant aptes à se superposer en position verrouillée de la manette (7, 7') de manière à y insérer un cadenas (44).

10. Châssis de débrochage pour un disjoncteur selon la revendication précédente, **caractérisé en ce que** lesdits moyens de guidage du chariot (2) mobile consistent, pour chaque côté latéral, en deux pions (8) positionnés en vis-à-vis de l'un parmi les deux flasques (4) et de l'un parmi les deux leviers (5), et étant mobiles à l'intérieur d'une rainure (17) dudit flasque (4) et simultanément contre un profil de came (23) dudit levier (5), pour assurer le déplacement du disjoncteur (1) de l'une vers l'autre desdites positions embrochée et débrochée, ledit profil de came (23) du levier (5) comportant un point d'inflexion (24) suivi d'une gorge (25).

11. Châssis de débrochage pour un disjoncteur selon la revendication précédente, **caractérisé en ce qu'**il comprend un indicateur (9) de position du chariot (2) par rapport à l'embase (1).

## Patentansprüche

1. Trennrahmen für einen Leistungsschalter (1), der so angeordnet werden kann, dass er den Leistungsschalter (1) in einer eingesteckten Position auf einem Anschlusssockel (3) oder in einer ausgesteckten Position dieses Sockels (3) hält,
wobei der genannte Rahmen zwei feste Flansche (4), die mit dem Sockel (3) verbunden werden können, und einen beweglichen Schlitten (2) umfasst, der den Leistungsschalter (1) tragen kann und mit Führungsmitteln versehen ist, die mit den entsprechenden festen Flanschen (4) zusammenwirken, um die Verschiebung des Leistungsschalters (1) von einer der genannten Ein- und Aussteckstellungen in die andere zu gewährleisten,
wobei jeder feste Flansch (4) mit einem Betätigungshebel (5) ausgestattet ist und um eine feste Achse (Y) schwenkbar ist,
der Rahmen simultane Gelenkmittel der beiden Hebel (5) aufweist, wobei jeder Hebel (5) so angeordnet ist, dass er mit den Führungsmitteln (2) des Schlittens zusammenwirkt, **dadurch gekennzeichnet, dass** jeder Hebel (5) mit einem Griff (6) versehen ist,
dass jeder Hebel (5) mit einer Verriegelungsvorrichtung ausgestattet ist, die so angeordnet ist, dass sie diesen Hebel (5) in einer Stellung blockiert, die der einen oder anderen der genannten Ein- und Aussteckstellung des Leistungsschalters (1) entspricht,
und dass er Mittel zur Kopplung der Betätigung der Hebel (5) mit der Betätigung der Verriegelungsvorrichtung umfasst.

2. Trennrahmen für einen Leistungsschalter nach dem vorhergehenden Anspruch,
**dadurch gekennzeichnet, dass** die genannten simultanen Gelenkmittel eine Verbindungswelle (22) umfassen, die die beiden Hebel (5) verbindet, wobei zwischen der Welle (22) und jedem Hebel (5) Mittel zur Drehsicherung angeordnet sind, wobei die Drehachse (Y) jedes Hebels (5) und die Drehachse der Welle (22) zusammenfallen.

3. Trennrahmen für einen Leistungsschalter gemäß einem der vorhergehenden Ansprüche,
**dadurch gekennzeichnet, dass** die Kopplungsmittel für jeden Hebel (5) eine Handhabe (7, 7') zur Steuerung der Verriegelungsvorrichtung umfassen, der am Griff (6) des Hebels (5) angeordnet ist.

4. Trennrahmen für einen Leistungsschalter nach dem vorstehenden Anspruch,
**dadurch gekennzeichnet, dass** die Handhabe (7, 7') entlang einer Achse senkrecht zu der Ebene, die die Bewegung des Hebels (5) enthält, zwischen einer verriegelten Position, in der eine Außenfläche des Hebels (7, 7') gegenüberliegend angeordnet ist, und in Anlage an mindestens einen Abschnitt der Außenkontur des Flansches (4) beweglich ist, und eine entriegelte Position, in der die Außenfläche des Griffs (7, 7') von der Außenkontur des Flansches (4) zurückgesetzt ist, wobei die Verriegelungsvorrichtung für jeden Hebel (5) Rückholmittel zur Rückführung der Handhabe (7, 7') in ihre verriegelte Position aufweist.

5. Trennrahmen für einen Leistungsschalter nach dem vorhergehenden Anspruch, **dadurch gekennzeichnet, dass** die Handhabe (7, 7') umfasst:
- einen Körper (29), der den Griff (6) des Hebels (5) umgibt und sich an dessen Form anpasst und Mittel (37) zur Führung der Handhabe (7, 7') in Translation in Bezug auf den Griff (6) aufweist,
- und eine Zunge (28), die sich orthogonal vom Körper (29) aus erstreckt und deren Außenrand der Außenfläche der Handhabe (7, 7') entspricht.

6. Trennrahmen für einen Leistungsschalter nach dem vorhergehenden Anspruch,
**dadurch gekennzeichnet, dass** die Rückholmittel eine Rückholfeder (38, 38') umfassen, die unter Druck arbeitet und zwischen einerseits einer beweglichen Fläche (40, 40'), die zur Handhabe (7, 7') gehört, und andererseits einer festen Fläche (41, 41'), die zum Griff (6) des Hebels (5) gehört und gegenüber der beweglichen Fläche (40, 40') angeordnet ist, eingefügt ist,
wobei die Feder (38, 38') zwischen einer Ruheposition, in der die bewegliche Oberfläche (40, 40') distal von der festen Oberfläche (41, 41') ist, und einer zusammengedrückten Position, in der die bewegliche Oberfläche (40, 40') proximal zu der festen Oberfläche (41, 41') ist, arbeitet.

7. Trennrahmen für einen Leistungsschalter nach dem vorhergehenden Anspruch,
**dadurch gekennzeichnet, dass** der äußere Rand der Zunge (28) aufweist:
- eine erste Zone (27), die mit einem ersten Abschnitt (14) der Außenkontur des Flansches (4) in Kontakt kommen kann, um das Ausstecken des Leistungsschalters (1) zu verhindern, und mit einem zweiten Abschnitt (16) der Außenkontur des Flansches (4) in Kontakt kommen kann, um das Herausziehen des Leistungsschalters (1) zu verhindern;
- eine zweite Zone (34), die mit einem dritten Abschnitt (15) der Außenkontur des Flansches (4) in Kontakt kommen kann, um ein Einstecken des Leistungsschalters (1) zu verhindern.

8. Trennrahmen für einen Leistungsschalter nach dem vorhergehenden Anspruch,
**dadurch gekennzeichnet, dass** die Zunge (28) der Handhabe (7, 7') Verstärkungsmittel aufweist, die eine Verdickung (33) umfassen, die sich im mittleren Bereich der Zunge (28) befindet und den Körper (29) der Handhabe (7, 7') verbindet.

9. Trennrahmen für einen Leistungsschalter nach dem vorhergehenden Anspruch,
**dadurch gekennzeichnet, dass** die Handhabe (7, 7') und der Griff (6) jeweils einen Schlitz (36, 36', 35, 35') aufweisen, wobei die Schlitze (36, 36', 35, 35') in der verriegelten Position des Griffs (7, 7') übereinandergelegt werden können, um ein Schloss (44) darin einzusetzen.

10. Trennrahmen für einen Leistungsschalter nach dem vorhergehenden Anspruch,
**dadurch gekennzeichnet, dass** die genannten Mittel zur Führung des beweglichen Schlittens (2) für jede Seitenfläche zwei Stifte (8) aufweisen, die gegenüber einem der beiden Flansche (4) und einem der beiden Hebel (5) angeordnet sind, und in einer Nut (17) des genannten Flansches (4) und gleichzeitig gegen ein Nockenprofil (23) des genannten Hebels (5) beweglich ist, um die Verschiebung des Leistungsschalters (1) von der einen in die andere der genannten ein- und ausgefahrenen Stellungen zu gewährleisten, wobei das genannte Nockenprofil (23) des Hebels (5) einen Wendepunkt (24), gefolgt von einer Nut (25), aufweist.

11. Trennrahmen für einen Leistungsschalter nach dem vorhergehenden Anspruch,
**dadurch gekennzeichnet, dass** dieser einen Indikator (9) für die Position des Schlittens (2) in Bezug auf die Basis (1) umfasst.

## Claims

1. Draw-out frame for a circuit breaker (1), which is capable of being arranged so as to keep said circuit breaker (1) in a plugged-in position in a connection socket (3) or in an unplugged position from said socket (3), said frame comprises two stationary flanges (4) capable of being connected to the socket (3), and a movable carriage (2) capable of supporting the circuit breaker (1) and provided with guiding means engaging with the corresponding stationary flanges (4) in order to ensure the movement of the circuit breaker (1) from one to the other of said plugged-in and unplugged positions, each stationary flange (4) being fitted with an operating lever (5) and pivots about a stationary axis (Y), said frame comprising simultaneous articulation means of the two levers (5), each lever (5) being arranged to engage with said means for guiding the carriage (2),
**characterised in that** each lever (5) is provided with a handle (6),
**in that** each lever (5) is provided with a locking device arranged to block said lever (5) in a position corresponding to one or other of said plugged-in and unplugged positions of the circuit breaker (1),
and **in that** it comprises means for coupling the manipulation of the levers (5) with the manipulation of the locking device.

2. Draw-out frame for a circuit breaker according to the preceding claim, **characterised in that** said means of simultaneous articulation consist of a connecting shaft (22) linking the two levers (5), rotational blocking means being arranged between the shaft (22) and each lever (5), the rotational axis (Y) of each lever (5) and the rotational axis of the shaft (22) being combined.

3. Draw-out frame for a circuit breaker according to any of the preceding claims, **characterised in that** said coupling means consist, for each lever (5), of a controller (7, 7') of the locking device arranged at the level of the handle (6) of the lever (5).

4. Draw-out frame for a circuit breaker according to the preceding claim, **characterised in that** the controller (7, 7') is movable in translation according to an axis perpendicular to the plane containing the movement of the lever (5), between a locked position where an external surface of the controller (7, 7') is positioned opposite and abutted against at least one section of the external contour of the flange (4), and an unlocked position where said external surface of the controller (7, 7') is positioned set back from the external contour of the flange (4), said locking device comprising for each lever (5) biasing means for returning the controller (7, 7') to its locked position.

5. Draw-out frame for a circuit breaker according to the preceding claim, **characterised in that** said controller (7, 7') consists of:
- a body (29) surrounding and embracing the form of the handle (6) of the lever (5) and comprising means for guiding in translation (37) the controller (7, 7') relative to the handle (6),
- and a tongue (28) extending orthogonally from the body (29) and the external edge of which corresponds to said external surface of the controller (7, 7').

6. Draw-out frame for a circuit breaker according to the preceding claim, **characterised in that** said biasing means consist of a biasing spring (38, 38') operating by compression inserted between on the one hand a mobile surface (40, 40') belonging to the controller (7, 7'), and on the other hand a fixed surface (41, 41') belonging to the handle (6) of the lever (5) and positioned opposite said mobile surface (40, 40'), said spring (38, 38') operating between a position of rest where the mobile surface (40, 40') is distal to the fixed surface (41, 41'), and a compressed position where the mobile surface (40, 40') is proximal to the fixed surface (41, 41').

7. Draw-out frame for a circuit breaker according to the preceding claim, **characterised in that** said external edge of the tongue (28) comprises:
- a first zone (27) able to come into contact with a first section (14) of the external contour of the flange (4) to prevent the unplugging of the circuit breaker (1), and in contact with a second section (16) of the external contour of the flange (4) to prevent the extraction of the circuit breaker (1);
- a second zone (34) able to come in contact with a third section (15) of the external contour of the flange (4) to prevent the plugging-in of the circuit breaker (1).

8. Draw-out frame for a circuit breaker according to the preceding claim, **characterised in that** the tongue (28) of the controller (7, 7') comprises reinforcing means consisting of a excessive thickness (33) located in the central zone of the tongue (28) and joining the body (29) of the controller (7, 7').

9. Draw-out frame for a circuit breaker according to the preceding claim, **characterised in that** the controller (7, 7') and the handle (6) each comprise a light (36, 36', 35, 35'), said lights (36, 36', 35, 35') being able to be superimposed in a locked position of the controller (7, 7') so as to insert a lock (44) there.

10. Draw-out frame for a circuit breaker according to the preceding claim, **characterised in that** said guiding means of the mobile carriage (2) consist, for each lateral side, of two slugs (8) positioned opposite one of the two flanges (4) and one of the two levers (5), and being movable on the inside of a groove (17) of said flange (4) and simultaneously against a cam profile (23) of said lever (5), to ensure the movement of the circuit breaker (1) from one to the other of said plugged-in and unplugged positions, said cam profile (23) of the lever (5) comprising an inflection point (24) followed by a recess (25).

11. Draw-out frame for a circuit breaker according to the preceding claim, **characterised in that** it comprises an indicator (9) of the position of the carriage (2) relative to the socket (1).
